# FASCICULE DE BREVET EUROPEEN

(11) **EP 2 878 961 B1**
(45) Date de publication et mention de la délivrance du brevet: **06.07.2016**
(21) Numéro de dépôt: 14195730.8
(22) Date de dépôt: 01.12.2014
(51) Int. Cl.: G01P 5/16, G01P 21/02, G01L 27/00, G01N 29/036

(54) **Procédé de contrôle d'une sonde de mesure de pression d'un écoulement.**
Verfahren zur Kontrolle einer Druckmesssonde eines Flusses
Method for controlling a probe for measuring the pressure of a flow

(30) Priorité: 29.11.2013 FR 1302781
(43) Date de publication de la demande: 03.06.2015
(73) Titulaire: Thales, 92200 Neuilly Sur Seine (FR)
(72) Inventeur: Robert, François, 37390 CHANCEAUX SUR CHOISILLE (FR)
(74) Mandataire: Collet, Alain

(56) Documents cités:
- FR-A1- 2 959 822
- GB-A- 2 478 522
- US-A1- 2007 280 046

## Description

L'invention concerne un procédé de contrôle d'une sonde à mesure de pression d'un écoulement. L'invention trouve une utilité particulière dans le domaine des sondes de pression mises en oeuvre dans le domaine aéronautique.

En effet, le pilotage de tout aéronef nécessite de connaître sa vitesse relative par rapport à l'air, c'est-à-dire au vent relatif. Cette vitesse est déterminée à l'aide de sondes de mesure de la pression statique Ps et de la pression totale Pt. Les pressions totale Pt et statique Ps fournissent le module de ce vecteur vitesse.

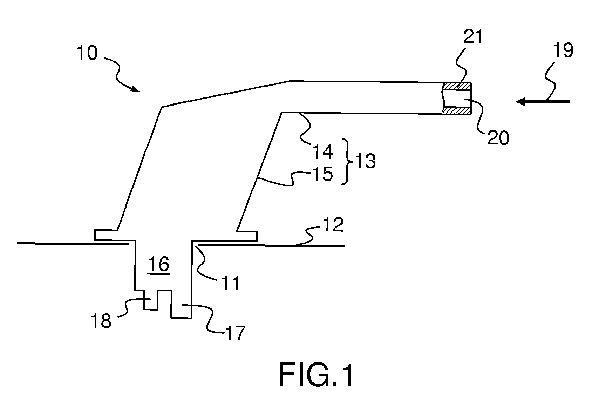

De manière connue, la mesure de la pression totale Pt peut être réalisée à l'aide d'un tube dit de Pitot. Il s'agit d'un tube ouvert à l'une de ses extrémités et obstrué à l'autre. L'extrémité ouverte du tube fait sensiblement face à l'écoulement. Le filet d'air situé en amont du tube est progressivement ralenti jusqu'à atteindre une vitesse quasi nulle à l'entrée du tube. Le ralentissement de la vitesse de ce filet d'air augmente sa pression. Cette pression augmentée forme la pression totale Pt de l'écoulement d'air. Le principe d'une telle sonde de mesure de pression totale est rappelé par la figure 1. La sonde 10 est destinée à être fixée en traversée d'une ouverture 11 réalisée dans la peau 12 d'un aéronef. La sonde 10 comprend une partie externe 13 à la peau 12 et formée par un tube de Pitot 14 porté par un mat 15. La sonde 10 comprend également une partie interne 16 comportant essentiellement un connecteur électrique 17 et un connecteur pneumatique 18. Le connecteur 17 permet de raccorder électriquement la sonde 10 à l'aéronef, par exemple pour raccorder des moyens de réchauffage pour le dégivrage de la sonde 10. Le connecteur 18 permet le raccordement pneumatique du tube de Pitot 14 à un capteur de pression ou autre dispositif de mesure, situé à l'intérieur de la peau 12 de l'aéronef. La sonde 10 est positionnée sur la peau 12 de l'aéronef de telle sorte que le tube de Pitot 14 soit orienté sensiblement suivant un axe longitudinal de l'aéronef, hors couche limite, pour que la direction de l'écoulement, matérialisée par une flèche 19, fasse sensiblement face à un orifice d'entrée 20 situé à une première extrémité 21 du tube de Pitot 14. Dans l'exemple représenté, le tube de Pitot 14 est fixe par rapport à la peau 12 de l'aéronef. Il est bien entendu possible de monter le tube de Pitot 14 sur un mat mobile comme par exemple une palette pouvant s'orienter dans l'axe de l'écoulement comme par exemple décrit dans le brevet publié sous le n° FR 2 665 539.

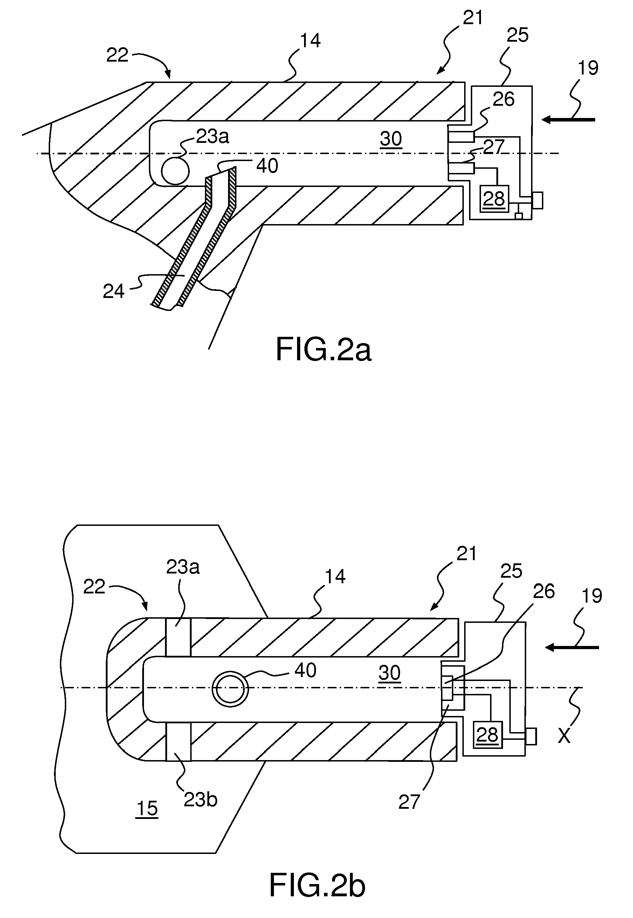

En pratique, l'écoulement d'air peut véhiculer des particules solides ou liquides, comme par exemple l'eau des nuages, susceptibles de pénétrer dans le tube de Pitot et de s'accumuler dans le tube au niveau de l'extrémité obstruée. Pour éviter qu'une telle accumulation ne vienne perturber la mesure de pression, on prévoit en général un ou plusieurs trous de purge et ainsi que des pièges à eau, pour éviter tout risque d'obstruction des canalisations chargées de transmettre la pression totale aux capteurs de pression situés à l'intérieur de la peau de l'aéronef ou aux instruments de la planche de bord de l'aéronef. Comme représenté sur les figures 2a et 2b, le tube de Pitot 14 comprend ainsi, à proximité d'une extrémité 22, un ou plusieurs trous de purge 23a et 23b permettant d'évacuer des particules susceptibles de pénétrer à l'intérieur du tube 14. Toujours au niveau de l'extrémité 22 du tube, un canal pneumatique 24 s'ouvre dans le tube 14 pour y former une prise de pression 40 au niveau de laquelle on cherche à mesurer la pression d'air. La prise de pression 40 est généralement construite de façon à éviter l'ingestion d'eau dans le tube 14 et former ainsi un piège à eau. Le canal 24 est par exemple relié à un capteur de pression non représenté sur la figure 2. Le capteur de pression permet de mesurer de façon effective la pression de l'air régnant à l'intérieur du tube 14 au niveau de son extrémité 22. Hormis le ou les trous de purge, dont les sections sont faibles par rapport à celle du tube 14, le tube 14 est fermé au niveau de son extrémité 22. La pression mesurée au niveau de cette extrémité représente donc la pression totale Pt de l'écoulement d'air.

Les trous de purge permettent d'évacuer les liquides et les éventuelles particules pouvant pénétrer dans le tube. Le ralentissement de l'air dans le tube n'est donc pas complet et la mesure de pression totale Pt s'en trouve altérée. Plus précisément, plus on cherche à éviter l'accumulation d'eau ou de particules de taille importante, plus on altère la mesure de pression totale en augmentant les dimensions ou le nombre de trous de purge. Inversement, plus on cherche à améliorer la mesure de pression totale Pt en diminuant les dimensions ou le nombre de trous de purge, plus le risque d'accumulation d'eau ou de particules augmente. Avec un tube de Pitot, on est donc tenu de réaliser un compromis entre qualité de la mesure de pression totale Pt et risque de perturbation de la mesure du fait de la pénétration d'eau, et de particules véhiculées par l'écoulement d'air où la mesure est réalisée.

Dans la vie opérationnelle des aéronefs, les trous de purges peuvent se polluer, du fait d'ingestion de poussière, d'insectes, de résidus de végétaux ou autres corps étrangers. Du fait de leur taille et de la position des tubes de Pitot sur le fuselage d'un aéronef, le contrôle périodique de l'intégrité des trous de purges est malaisé.

La vérification des trous de purge des tubes de Pitot est généralement réalisée de manière visuelle. L'opérateur chargé de la maintenance des avions inspecte le ou les trous de purge à l'aide d'une petite lampe. En cas d'observation de corps étrangers, la sonde est démontée, et ses circuits pneumatiques nettoyés. Cette opération est d'autant plus malaisée que l'avion est de grande taille. L'accès à la sonde et aux trous de purge dont le diamètre est généralement inférieur à 1 mm de diamètre est difficile.

On connait aussi de la demanderesse un dispositif de contrôle destiné à être connecté de manière temporaire à la sonde de mesure de pression, et permettant de contrôler à l'aide d'un émetteur et d'un récepteur acoustiques la non-obstruction des cavités internes et des trous de purges de la sonde. Le principe d'un tel dispositif est notamment décrit par le brevet publié sous la référence FR 2 959 822. Les figures 2a et 2b de la présente demande rappelle également ce principe. Le dispositif de contrôle 25 comprend un émetteur 26 et un récepteur 27 destinés à être connectés à un volume interne 30 de la sonde, formé par l'intérieur du tube 14, le ou les trous de purge 23a et 23b, et le canal 24. L'émetteur émet un signal acoustique se propageant dans le volume interne 30 et le récepteur est configuré pour capter un signal acoustique observé dans le volume interne 30. Le dispositif comprend aussi des moyens de traitement 28 permettant de comparer le signal acoustique observé dans le volume interne à un signal acoustique de référence mesuré sur une sonde non encrassée, dans le but d'établir la présence de particule dans le volume interne.

La comparaison du signal acoustique mesuré au cours d'une opération de maintenance périodique, à un signal acoustique de référence prédéfini se heurte en pratique à plusieurs difficultés. Le signal acoustique capté par le récepteur est fortement dépendant des conditions de la mesure. Par exemple, la température ambiante qui affecte la propagation du signal acoustique impacte directement l'efficacité de la comparaison. Des dispersions mêmes limitées de la géométrie du volume interne impacte aussi le signal acoustique mesuré. La comparaison directe d'une mesure acoustique réalisée lors d'une opération de maintenance pour une sonde montée sur un aéronef, avec un signal acoustique mesuré en laboratoire sur une sonde de référence ne permet pas de détecter efficacement l'obstruction des trous de purges d'une sonde de mesure de pression.

La présente invention porte sur un procédé de détection d'obstruction de trou de purge palliant les inconvénients des solutions envisagées jusqu'à présent.

A cet effet, l'invention a pour objet un procédé de détection d'obstruction de trou de purge d'une sonde de mesure de pression au moyen d'un dispositif de contrôle acoustique; la sonde comprenant un volume interne muni d'au moins un trou de purge communiquant avec l'extérieur du volume ; le dispositif de contrôle pouvant être connecté au volume interne de la sonde et comprenant des moyens de mesure d'une empreinte acoustique du volume interne. Le procédé comprend des étapes consistant à :
- mesurer une empreinte acoustique en bouchant l'au moins un trou de purge de l'extérieur du volume,
- mesurer une empreinte acoustique sans boucher l'au moins un trou de purge de l'extérieur du volume,
- comparer les deux empreintes acoustiques mesurées.

Avantageusement, le procédé comprend une étape préalable consistant à connecter le dispositif de contrôle acoustique à la sonde.

Avantageusement, l'au moins un trou de purge est bouché par une intervention manuelle d'un opérateur directement sur la sonde.

Avantageusement, le procédé comprend des étapes intermédiaires d'affichage d'instructions destinées à un opérateur, consistant à requérir le déclenchement d'une mesure d'empreinte acoustique au moyen du dispositif de contrôle, et/ou le bouchage de l'au moins un trou de purge de la sonde.

Avantageusement, le procédé compred une étape d'affichage de la comparaison des empreintes acoustiques mesurées, et/ou d'un constat d'obstruction de l'au moins un trou de purge.

Avantageusement, l'étape de comparaison consiste à comparer les empreintes acoustiques mesurées pour une fréquence de résonance prédéfinie ou une plage de fréquence prédéfinie.

Avantageusement, les moyens de mesure du dispositif de contrôle comprennent un émetteur et un récepteur acoustiques pouvant être connecté au volume interne de façon à ce que l'émetteur émette un signal acoustique se propageant dans le volume interne et de façon à ce que le récepteur capte un signal acoustique observé dans le volume interne.

Selon un aspect particulier de l'invention, le volume interne de la sonde est muni de deux trous de purge. La sonde et le dispositif de contrôle sont configurés de manière à ce que l'empreinte acoustique mesurée en bouchant uniquement un premier trou de purge de l'extérieur du volume, est sensiblement identique à l'empreinte acoustique mesurée en bouchant uniquement un second trou de purge de l'extérieur du volume. Dans une première mise en oeuvre, le procédé comprend des étapes consistant à :
- mesurer une empreinte acoustique en bouchant uniquement le premier trou de purge,
- mesurer une empreinte acoustique en bouchant uniquement le second trou de purge,
- mesurer une empreinte acoustique sans boucher les deux trous de purge,
- comparer les trois empreintes acoustiques mesurées.
Dans une mise en oeuvre alternative, le procédé comprend des étapes consistant à :
- mesurer une empreinte acoustique en bouchant simultanément les deux trous de purge,
- mesurer une empreinte acoustique sans boucher les deux trous de purge,
- comparer les deux empreintes acoustiques mesurées.

L'invention sera mieux comprise et d'autres avantages apparaîtront à la lecture de la description détaillée des modes de réalisation donnés à titre d'exemple sur les figures suivantes.
La figure 1, déjà présentée, représente une sonde de mesure de pression totale selon l'état connu de la technique,
les figures 2a et 2b, déjà présentées, représentent deux vues de la sonde de la figure 1 au voisinage de laquelle est disposé un dispositif de contrôle selon l'état connu de la technique,
les figures 3a et 3b illustrent le principe du procédé selon l'invention de détection d'obstruction de trou de purge d'une sonde de mesure de pression au moyen du dispositif,
la figure 4 représente sous la forme d'un logigramme un exemple de procédé de détection selon l'invention.

Par souci de clarté, les mêmes éléments portent les mêmes repères dans les différentes figures.

L'invention est décrite en rapport à une sonde de mesure de pression totale, analogue à celle décrite précédemment par la figure 1. Il est théoriquement possible de la mettre en oeuvre pour une sonde de mesure de pression statique, pour une sonde Pitot/statique ou pour une sonde d'incidence totalement ou partiellement pneumatique. De manière générale, le dispositif selon l'invention est destiné au contrôle d'une sonde comprenant un volume interne muni d'au moins un trou de purge communiquant avec l'extérieur du volume. Dans le cas de la sonde de pression totale représentée sur les figures 2a et 2b, le volume interne 30 de la sonde comprend l'intérieur du tube de Pitot 14, deux trous de purge 23a et 23b, et le canal 24 par exemple relié à un capteur de pression.

Le procédé met en oeuvre un dispositif de contrôle acoustique pouvant être connecté au volume interne de la sonde. Le dispositif peut être connecté à la sonde de manière temporaire, par exemple par un opérateur lors d'une opération de maintenance. La connexion peut également être permanente, le dispositif faisant par exemple partie intégrante de la sonde. Le dispositif comprend des moyens de mesure 25 configurés pour mesurer une empreinte acoustique du volume interne 30 de la sonde. Pour cela, les moyens de mesure 25 comprennent un émetteur acoustique 26 capable d'émettre un signal acoustique se propageant dans le volume interne 30, et un récepteur 27 capable de capter un signal acoustique observé dans le volume interne 30. Le signal acoustique émis par l'émetteur peut être le signal acoustique obtenu en balayant une bande de fréquence donnée, aussi connu sous l'appellation anglaise *chirp.* Le signal acoustique observé par le récepteur en réponse à cette rampe de fréquence émise constitue alors l'empreinte acoustique du volume. Une mesure d'empreinte acoustique par le dispositif de contrôle peut être déclenchée sur requête d'un opérateur. La mesure consiste à émettre le signal acoustique se propageant dans le volume interne, à capter le signal acoustique observé dans le volume, et à mémoriser ce signal acoustique capté par le récepteur.

L'invention porte sur un procédé de détection d'obstruction de trou de purge d'une sonde de mesure de pression au moyen du dispositif de contrôle. L'idée générale de l'invention consiste à mesurer l'empreinte acoustique de la sonde en bouchant de manière volontaire un ou plusieurs trous de purges. Les trous de purge peuvent par exemple être bouchés de l'extérieur, directement sur la sonde par un opérateur de maintenance. La détection se base ensuite sur la comparaison de cette empreinte avec une empreinte mesurée sans boucher le ou les trous de purge.

Notons que les figures 2a et 2b représentent une architecture répandue d'une sonde comprenant deux trous de purge identiques aménagés en regard l'un de l'autre dans le tube de Pitot. Le dispositif de contrôle peut être connecté à la sonde par l'extrémité 21 du tube de Pitot, et configuré de sorte que le signal acoustique émis au travers de l'orifice d'entrée 20 forme une onde plane se propageant dans le tube selon son axe principal référencé X. Dans cette configuration de la sonde et du dispositif, les empreintes acoustiques mesurées par le dispositif sont identiques pour les deux trous de purge. Autrement dit, l'empreinte mesurée en bouchant un premier trou de purge uniquement, est sensiblement identique à l'empreinte acoustique mesurée en bouchant de l'extérieur un second trou de purge uniquement. L'invention est décrite dans la suite en rapport à cette configuration particulière. Il est bien entendu que le procédé selon l'invention ne se limite pas à cette configuration mais est applicable plus généralement à une sonde comprenant un volume interne muni d'au moins un trou de purge communiquant avec l'extérieur, et un dispositif pouvant être connecté au volume interne et comprenant des moyens de mesure d'une empreinte acoustique du volume interne.

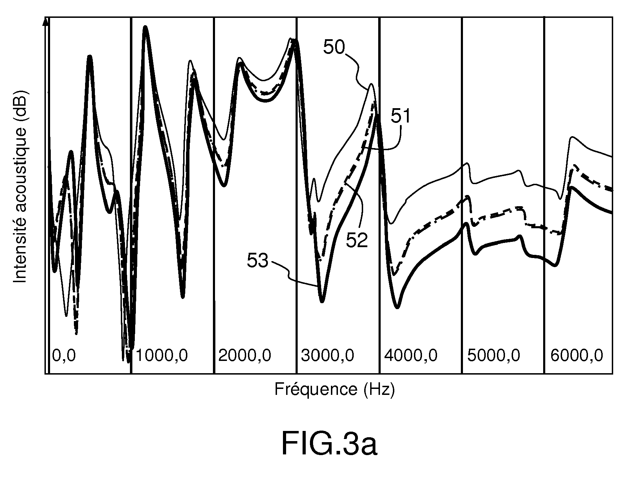

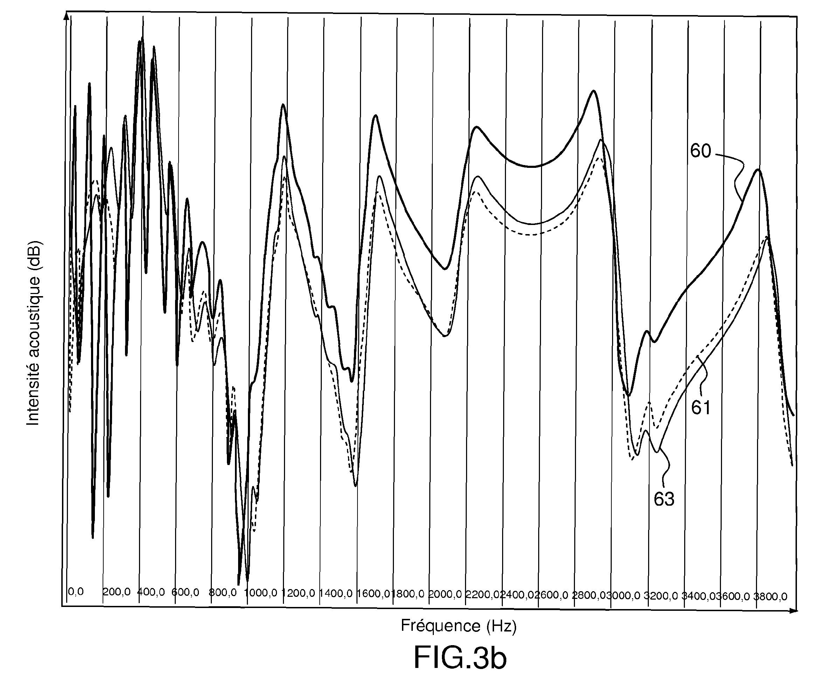

Les figures 3a et 3b illustrent le principe du procédé de détection d'obstruction de trou de purge selon l'invention.

Sur la **figure 3a** sont représentés quatre signaux acoustiques mesurés pour une même sonde et au moyen du dispositif 25. L'intensité du signal acoustique mesuré est représentée en fonction de la fréquence. Le signal acoustique émis est obtenu en balayant une bande de fréquence croissante entre 0 et 7000Hz.

Le signal acoustique référencé 50 correspond à l'empreinte acoustique mesurée dans le cas où les deux trous de purge 23a et 23b sont bouchés. Le signal acoustique référencé 51 correspond à l'empreinte acoustique mesurée dans le cas où un premier trou de purge, par exemple 23a dit trou « droit », est bouché. Le signal acoustique référencé 52 correspond au cas où un second trou de purge, par exemple 23b dit trou « gauche », est bouché. Enfin, le signal acoustique référencé 53 correspond au cas où aucun des deux trous de purge 23a et 23b n'est bouché. Pour ces mesures, la sonde n'est pas encrassée, le volume interne ne comprend pas de particule susceptible d'obstruer les trous de purge. Les deux trous de purge présentent une même géométrie interne. De manière logique, le signal acoustique 51 mesuré en bouchant le trou droit, est sensiblement identique au signal acoustique 52 mesuré en bouchant le trou gauche. On constate en revanche que ces deux signaux se distinguent nettement du signal acoustique 53 mesuré dans le cas où le trou droit et le trou gauche ne sont pas bouchés.

Le principe de la détection de l'obstruction d'un trou de purge est de comparer une empreinte acoustique mesurée en bouchant le trou de purge de manière volontaire de l'extérieur de la sonde, avec une empreinte acoustique mesurée sans boucher ce trou de purge. En comparant les signaux autour d'une fréquence de résonance particulière, le procédé peut conclure que le trou de purge est effectivement obstrué lorsque les deux signaux sont identiques, ou qu'il n'est pas obstrué lorsque les signaux diffèrent d'une valeur supérieure à un seuil prédéfini. Le procédé de détection peut être enrichi de diverses manières pour en améliorer l'efficacité. Par exemple pour une sonde à deux trous de purge, les empreintes acoustiques mesurées en bouchant uniquement le trou droit puis uniquement le trou gauche peuvent être comparées entre elles, ou comparées à l'empreinte mesurée dans le cas où aucun des trous n'est bouché. Plusieurs mises en oeuvre du procédé sont détaillées par la suite.

Sur la **figure 3b** sont représentés trois signaux acoustiques mesurés pour une même sonde et au moyen du dispositif de contrôle 25. Comme pour la figure précédente, l'intensité du signal acoustique mesuré est représentée en fonction de la fréquence. Le signal acoustique émis est obtenu en balayant une bande de fréquence croissante entre 0 et 4000Hz.

La sonde mise en oeuvre pour la mesure des signaux représentés sur la figure 3b n'est pas identique à celle mise en oeuvre pour la figure 3a. Le volume interne des deux sondes comprend le même tube de Pitot et les deux mêmes trous de purge. En revanche, le canal pneumatique 24 reliant l'intérieur du tube au capteur de pression ne présente pas la même architecture pour les deux sondes. Typiquement, le canal 24 constitué d'un tube matériau flexible présente une longueur sensiblement supérieure pour la sonde de la figure 3a comparé à celui de la sonde de la figure 3b.

Le signal acoustique référencé 60 correspond à l'empreinte acoustique mesurée dans le cas où les deux trous de purge 23a et 23b sont bouchés. Le signal acoustique référencé 61 correspond à l'empreinte acoustique mesurée dans le cas où un trou de purge est bouché, par exemple le trou droit. Le signal acoustique référencé 63 correspond au cas où aucun des deux trous de purge 23a et 23b n'est bouché.

On constate que l'empreinte acoustique est fortement impactée par la modification de géométrie du volume interne. Les signaux acoustiques mesurés à basse fréquence, typiquement entre 0 et 1000Hz, sont très différents entre les figures 3a et 3b. On constate également que les signaux 60, 61 et 63 se distinguent très nettement entre eux, en particulier dans la zone des hautes fréquences, au-delà de 1000Hz. Ces deux constats mettent en évidence les limites des solutions connues et l'intérêt du procédé envisagé par l'invention.

La mesure de l'empreinte acoustique est sensible à toute modification de géométrie du volume interne, de sorte qu'il est délicat d'identifier efficacement l'obstruction d'un trou de purge par comparaison du signal acoustique mesuré sur une sonde opérationnelle avec un signal mesuré sur une sonde de référence ; un écart entre ces deux signaux pouvant aussi résulter d'une dispersion de fabrication de la sonde, d'un encrassement de la sonde en dehors des trous de purge, ou encore d'une modification des conditions opératoires (différence de température ambiante).

Dans le procédé envisagé par l'invention, la comparaison porte au contraire sur des empreintes acoustiques mesurées pour une même sonde, prise dans les mêmes conditions. Les écarts entre les signaux sont essentiellement liés à une modification de la géométrie des trous de purges. Il devient possible de détecter efficacement l'obstruction d'un trou de purge.

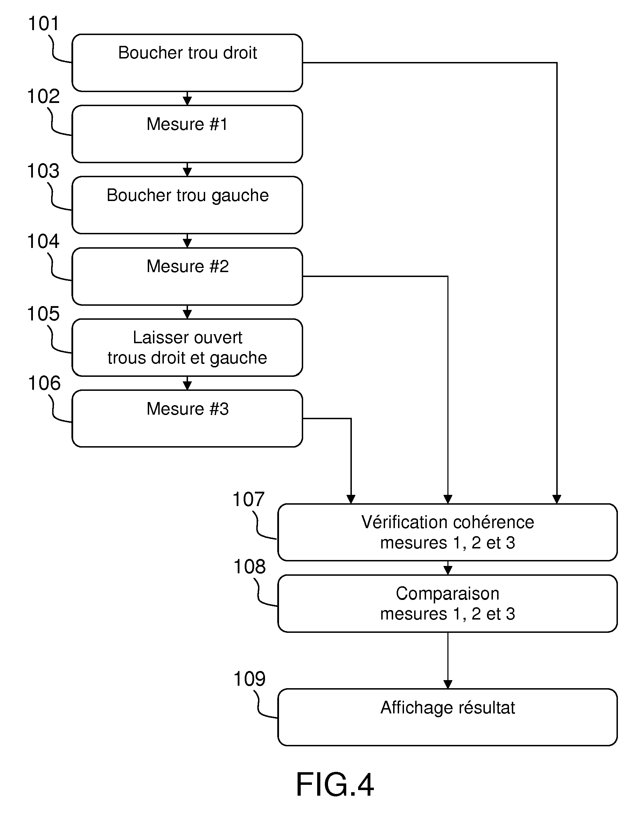

La **figure 4** représente sous la forme d'un logigramme un exemple de procédé de détection selon l'invention. Cet exemple de procédé est applicable au cas d'une sonde à deux trous de purge telle que mentionnée précédemment. Le procédé comprend ainsi des étapes référencés 102, 104, 106 et 108, consistant respectivement à :
- mesurer une empreinte acoustique en bouchant un premier trou de purge,
- mesurer une empreinte acoustique en bouchant un second trou de purge,
- mesurer une empreinte acoustique en ne bouchant aucun des deux trous,
- comparer les trois empreintes acoustiques mesurées.

Dans une mise en oeuvre privilégiée, les deux trous sont bouchés de manière manuelle par un opérateur, directement sur la sonde. Dans ce cas, la mesure d'une empreinte acoustique est également déclenchée par l'opérateur. Le procédé comprend alors les étapes intermédiaires 101, 103 et 105, de transmission d'instructions à l'opérateur, consistant à requérir le bouchage d'un ou plusieurs trous de purges et/ou le déclenchement de la mesure d'empreinte acoustique. Il est envisagé de transmettre les instructions à l'opérateur par affichage au moyen d'un écran de contrôle, ou encore par un dispositif sonore.

Notons que l'ordre des trois étapes de mesure 102, 104 et 106 peut être modifié. A l'issue des trois étapes de mesure, une étape 107 vérifie la cohérence des signaux acoustique mémorisés lors des trois mesures. Le procédé peut être interrompu à l'issue de cette étape si une incohérence est détectée.

A l'issue de l'étape 108 de comparaison, le procédé peut également comprendre une étape 109 d'affichage de la comparaison des trois mesures, ou plus directement du résultat de cette comparaison par un constat de l'obstruction ou non des trous de purge.

Plusieurs modes de réalisation sont envisagés pour l'étape de comparaison 108 des mesures d'empreintes acoustiques. Dans le cas d'une sonde munie d'un unique trou de purge, l'étape consiste simplement à comparer le signal acoustique mesuré en bouchant ce trou au signal acoustique mesuré sans le boucher. Plus précisément, l'étape peut être configurée pour comparer les deux empreintes acoustiques mesurées pour une fréquence de résonance prédéfinie ou plus largement une plage de fréquence prédéfinie, et conclure à une obstruction du trou de purge si les deux empreintes se distinguent d'une valeur inférieure à un seuil prédéfini.

Dans le cas d'une sonde munie de deux trous de purge, l'étape 108 peut comprendre les sous-étapes suivantes consistant à :
- comparer l'empreinte 51 (trou droit bouché) à l'empreinte 53 (trous non bouchés)
- comparer l'empreinte 52 (trou gauche bouché) à l'empreinte 53 (trous non bouchés)
- comparer l'empreinte 51 (trou droit bouché) à l'empreinte 52 (trou gauche bouché)

Les deux premières sous-étapes permettent de conclure à une obstruction du trou de purge considéré, respectivement le trou droit et le trou gauche, dans le cas où les empreintes comparées sont identiques, à une tolérance près prédéfinie. La troisième sous-étape permet de s'assurer de la cohérence des mesures dans le cas où les empreintes comparées se distinguent au-delà de la tolérance prédéfinie.

Dans une mise en oeuvre alternative du procédé, l'étape 108 peut comprendre les sous-étapes suivantes consistant à :
- comparer l'empreinte 51 (trou droit bouché) à l'empreinte 53 (trous non bouchés)
- comparer l'empreinte 50 (trous droit et gauche bouchés) à l'empreinte 53 (trous non bouchés)
- comparer l'empreinte 51 (trou droit bouché) à l'empreinte 50 (trous droit et gauche bouché).

Cette mise en oeuvre alternative de l'étape de comparaison permet également de conclure à une obstruction de l'un ou des deux trous de purge. Il est aussi envisagé d'associer ces deux mises en oeuvre dans un même procédé de détection d'obstruction de trou de purge.

Enfin, dans une autre mise en oeuvre du procédé, applicable au cas d'une sonde à deux trous de purge, le procédé peut comprendre des étapes consistant à :
- mesurer une empreinte acoustique en bouchant simultanément les trous de purge,
- mesurer une empreinte acoustique en ne bouchant aucun des deux trous,
- comparer les deux empreintes acoustiques mesurées.
La comparaison des deux empreintes pour une fréquence de résonance prédéfinie permet de déterminer sur la sonde présente une obstruction des trous de purge, susceptible d'affecter son fonctionnement. Cette dernière mise en oeuvre est toutefois moins précise. Elle ne permet pas de déterminer quel trou de purge est bouché.

## Revendications

1. Procédé de détection d'obstruction de trou de purge d'une sonde de mesure de pression (10) au moyen d'un dispositif de contrôle acoustique (25);
la sonde (10) comprenant un volume interne (30) muni d'au moins un trou de purge (23a) communiquant avec l'extérieur du volume (30) ;
le dispositif de contrôle (25) pouvant être connecté au volume interne (30) de la sonde (10) et comprenant des moyens de mesure (25) d'une empreinte acoustique du volume interne (30) ;
le procédé étant **caractérisé en ce qu'**il comprend des étapes consistant à :
• mesurer une empreinte acoustique en bouchant l'au moins un trou de purge (23a) de l'extérieur du volume (30),
• mesurer une empreinte acoustique sans boucher l'au moins un trou de purge (23a) de l'extérieur du volume (30),
• comparer les deux empreintes acoustiques mesurées.

2. Procédé selon la revendication 1, comprenant une étape préalable consistant à connecter le dispositif de contrôle acoustique (25) à la sonde (10).

3. Procédé selon la revendication 1, dont l'au moins un trou de purge (23a) est bouché par une intervention manuelle d'un opérateur directement sur la sonde (10).

4. Procédé selon la revendication 1, comprenant des étapes intermédiaires d'affichage d'instructions destinées à un opérateur, consistant à requérir le déclenchement d'une mesure d'empreinte acoustique au moyen du dispositif de contrôle (25), et/ou le bouchage de l'au moins un trou de purge (23a) de la sonde (10).

5. Procédé selon l'une des revendications 1 ou 2, comprenant une étape d'affichage de la comparaison des empreintes acoustiques mesurées, et/ou d'un constat d'obstruction de l'au moins un trou de purge (23a).

6. Procédé selon l'une des revendications précédentes, dont l'étape de comparaison consiste à comparer les empreintes acoustiques mesurées pour une fréquence de résonance prédéfinie ou une plage de fréquence prédéfinie.

7. Procédé selon l'une des revendications précédentes, dont les moyens de mesure du dispositif de contrôle (25) comprennent un émetteur (26) et un récepteur (27) acoustiques pouvant être connecté au volume interne (30) de façon à ce que l'émetteur (26) émette un signal acoustique se propageant dans le volume interne (30) et de façon à ce que le récepteur (27) capte un signal acoustique observé dans le volume interne (30).

8. Procédé selon l'une des revendications précédentes, dont le volume interne (30) de la sonde (10) est muni de deux trous de purge (23a, 23b); la sonde (10) et le dispositif de contrôle (25) étant configurés de manière à ce que l'empreinte acoustique mesurée en bouchant uniquement un premier trou de purge (23a) de l'extérieur du volume (30), est sensiblement identique à l'empreinte acoustique mesurée en bouchant uniquement un second trou de purge (23b) de l'extérieur du volume (30) ;
Le procédé comprenant des étapes (102, 104, 106, 108) consistant à :
• mesurer une empreinte acoustique (50) en bouchant uniquement le premier trou de purge (23a),
• mesurer une empreinte acoustique (51) en bouchant uniquement le second trou de purge (23b),
• mesurer une empreinte acoustique (52) sans boucher les deux trous de purge (23a, 23b),
• comparer les trois empreintes acoustiques (50, 51, 52) mesurées.

9. Procédé selon la revendication 8, dont l'étape de comparaison (108) comprend des sous-étapes consistant à comparer :
• l'empreinte acoustique (51) mesurée en bouchant le premier trou de purge (23a) avec l'empreinte acoustique (53) mesurée sans boucher les trous de purge (23a, 23b),
• l'empreinte acoustique (52) mesurée en bouchant le second trou de purge (23b) avec l'empreinte acoustique (53) mesurée sans boucher les trous de purge (23a, 23b),
• l'empreinte acoustique (51) mesurée en bouchant le premier trou de purge (23a) avec l'empreinte acoustique (52) mesurée en bouchant le second trou de purge (23b).

10. Procédé selon l'une des revendications 8 ou 9, dont l'étape de comparaison (108) comprend des sous-étapes consistant à comparer :
• l'empreinte acoustique (51) mesurée en bouchant le premier trou de purge (23a) avec l'empreinte acoustique (53) mesurée sans boucher les trous de purge (23a, 23b),
• l'empreinte acoustique (50) mesurée en bouchant les deux trous de purge (23a, 23b) avec l'empreinte acoustique (53) mesurée sans boucher les trous de purge (23a, 23b),
• l'empreinte acoustique (51) mesurée en bouchant le premier trou de purge (23a) avec l'empreinte acoustique (50) mesurée en bouchant les deux trous de purge (23a, 23b).

11. Procédé selon l'une des revendications 1 à 7, dont le volume interne (30) de la sonde (10) est muni de deux trous de purge (23a, 23b); la sonde (10) et le dispositif de contrôle (25) étant configurés de manière à ce que l'empreinte acoustique mesurée en bouchant uniquement un premier trou de purge (23a) de l'extérieur du volume (30), est sensiblement identique à l'empreinte acoustique mesurée en bouchant uniquement un second trou de purge (23b) de l'extérieur du volume (30) ;
Le procédé comprenant des étapes consistant à :
• mesurer une empreinte acoustique en bouchant simultanément les deux trous de purge (23a, 23b),
• mesurer une empreinte acoustique sans boucher les deux trous de purge (23a, 23b),
• comparer les deux empreintes acoustiques mesurées.

## Patentansprüche

1. Verfahren zum Erkennen einer Obstruktion in einem Belüftungsloch einer Druckmesssonde (10) mittels einer akustischen Prüfvorrichtung (25),
wobei die Sonde (10) ein Innenvolumen (30) umfasst, das mit mindestens einem Belüftungsloch (23a) versehen ist, das mit der Außenseite des Volumens (30) in Verbindung ist,
wobei die Prüfvorrichtung (25) mit dem Innenvolumen (30) der Sonde (10) verbunden werden kann und Mittel (25) zum Messen eines akustischen Fingerabdrucks des Innenvolumens (30) umfasst,
wobei das Verfahren **dadurch gekennzeichnet ist, dass** es die folgenden Schritte beinhaltet:
• Messen eines akustischen Fingerabdrucks durch Verstopfen des mindestens einen Belüftungslochs (23a) von der Außenseite des Volumens (30);
• Messen eines akustischen Fingerabdrucks ohne Verstopfen des mindestens einen Belüftungslochs (23a) von der Außenseite des Volumens (30);
• Vergleichen der beiden gemessenen akustischen Fingerabdrücke.

2. Verfahren nach Anspruch 1, das einen Vorabschritt beinhaltet, der das Verbinden der akustischen Prüfvorrichtung (25) mit der Sonde (10) beinhaltet.

3. Verfahren nach Anspruch 1, wobei das mindestens eine Belüftungsloch (23a) durch einen direkten manuellen Eingriff eines Bedieners an der Sonde (10) verstopft wird.

4. Verfahren nach Anspruch 1, das Zwischenschritte des Anzeigens von für einen Bediener bestimmten Befehlen beinhaltet, die darin bestehen eine Messung eines akustischen Fingerabdrucks mittels der Prüfvorrichtung (25) auszulösen und/oder das mindestens eine Belüftungsloch (23a) der Sonde (10) zu verstopfen.

5. Verfahren nach Anspruch 1 oder 2, das einen Schritt des Anzeigens des Vergleichs der gemessenen akustischen Fingerabdrücke und/oder einer Feststellung einer Obstruktion des mindestens einen Belüftungslochs (23a) beinhaltet.

6. Verfahren nach einem der vorherigen Ansprüche, wobei der Vergleichsschritt das Vergleichen der gemessenen akustischen Fingerabdrücke für eine vordefinierte Resonanzfrequenz oder einen vordefinierten Frequenzbereich beinhaltet.

7. Verfahren nach einem der vorherigen Ansprüche, wobei die Messmittel der Prüfvorrichtung (25) einen akustischen Sender (26) und Empfänger (27) umfassen, die mit dem Innenvolumen (30) verbunden werden können, so dass der Sender (26) ein akustisches Signal sendet, das sich in dem Innenvolumen (30) ausbreitet, und so dass der Empfänger (27) ein in dem Innenvolumen (30) beobachtetes akustisches Signal erkennt.

8. Verfahren nach einem der vorherigen Ansprüche, wobei das Innenvolumen (30) der Sonde (10) mit zwei Belüftungslöchern (23a, 23b) versehen ist, wobei die Sonde (10) und die Prüfvorrichtung (25) so konfiguriert sind, dass der mit Verstopfung nur eines ersten Belüftungslochs (23a) von der Außenseite des Volumens (30) gemessene akustische Fingerabdruck im Wesentlichen identisch ist mit dem durch Verstopfen nur eines zweiten Belüftungslochs (23b) von der Außenseite des Volumens (30) gemessenen akustischen Fingerabdruck,
wobei das Verfahren die folgenden Schritte (102, 104, 106, 108) beinhaltet:
• Messen eines akustischen Fingerabdrucks (50) durch Verstopfen nur des ersten Belüftungslochs (23a);
• Messen eines akustischen Fingerabdrucks (51) durch Verstopfen nur des zweiten Belüfungslochs (23b);
• Messen eines akustischen Fingerabdrucks (52), ohne die zwei Belüfungslöcher (23a, 23b) zu verstopfen;
• Vergleichen der drei gemessenen akustischen Fingerabdrücke (50, 51,52).

9. Verfahren nach Anspruch 8, wobei der Vergleichsschritt (108) Teilschritte beinhaltet, die folgende Vergleiche beinhalten:
• den durch Verstopfen des ersten Belüftungslochs (23a) gemessenen akustischen Fingerabdruck (51) mit dem ohne Verstopfen der Belüftungslöcher (23a, 23b) gemessenen akustischen Fingerabdruck (53);
• den durch Verstopfen des zweiten Belüftungslochs (23b) gemessenen akustischen Fingerabdruck (52) mit dem ohne Verstopfen der Belüftungslöcher (23a, 23b) gemessenen akustischen Fingerabdruck (53);
• den durch Verstopfen des ersten Belüftungslochs (23a) gemessenen akustischen Fingerabdruck (51) mit dem durch Verstopfen des zweiten Belüftungslochs (23b) gemessenen akustischen Fingerabdruck (52).

10. Verfahren nach Anspruch 8 oder 9, wobei der Vergleichsschritt (108) Teilschritte beinhaltet, die die folgenden Vergleiche beinhalten:
• den durch Verstopfen des ersten Belüftungslochs (23a) gemessenen akustischen Fingerabdruck (51) mit dem ohne Verstopfen der Belüftungslöcher (23a, 23b) gemessenen akustischen Fingerabdruck (53);
• den durch Verstopfen der zwei Belüftungslöcher (23a, 23b) gemessenen akustischen Fingerabdruck (50) mit dem ohne Verstopfen der Belüftungslöcher (23a, 23b) gemessenen akustischen Fingerabdruck (53),
• den durch Verstopfen des ersten Belüftungslochs (23a) gemessenen akustischen Fingerabdruck (51) mit dem durch Verstopfen der zwei Belüftungslöcher (23a, 23b) gemessenen akustischen Fingerabdruck (50).

11. Verfahren nach einem der Ansprüche 1 bis 7, wobei das Innenvolumen (30) der Sonde (10) mit zwei Belüftungslöchern (23a, 23b) versehen ist, wobei die Sonde (10) und die Prüfvorrichtung (25) so konfiguriert sind, dass der durch Verstopfen von nur einem ersten Belüftungsloch (23a) von der Außenseite des Volumens (30) gemessene akustische Fingerabdruck im Wesentlichen mit dem durch Verstopfen nur eines zweiten Belüftungslochs (23b) von der Außenseite des Volumens (30) gemessenen akustischen Fingerabdruck identisch ist,
wobei das Verfahren die folgenden Schritte beinhaltet:
• Messen eines akustischen Fingerabdrucks durch gleichzeitiges Verstopfen der zwei Belüftungslöcher (23a, 23b);
• Messen eines akustischen Fingerabdrucks, ohne die zwei Belüftungslöcher (23a, 23b) zu verstopfen;
• Vergleichen der beiden gemessenen akustischen Fingerabdrücke.

## Claims

1. A method for detecting obstructions in a purge hole of a pressure measurement probe (10) using a sound control device (25),
said probe (10) comprising an internal volume (30) provided with at least one purge hole (23a) communicating with the exterior of said volume (30),
said control device (25) being able to be connected to said internal volume (30) of said probe (10) and comprising means (25) for measuring a sound footprint of said internal volume (30),
said method being **characterised in that** it comprises the following steps:
• measuring a sound footprint with plugging of the at least one purge hole (23a) from the exterior of said volume (30);
• measuring a sound footprint without plugging of the at least one purge hole (23a) from the exterior of said volume (30);
• comparing the two measured sound footprints.

2. The method according to claim 1, comprising a prior step involving connecting said sound control device (25) to said probe (10).

3. The method according to claim 1, wherein the at least one purge hole (23a) is plugged by a direct manual intervention of an operator on said probe (10).

4. The method according to claim 1, comprising intermediate steps of displaying instructions intended for an operator, consisting in requiring the triggering of a measurement of a sound footprint using said control device (25) and/or the plugging of the at least one purge hole (23a) of said probe (10).

5. The method according to any one of claims 1 to 2, comprising a step of displaying the comparison of the measured sound footprints and/or a notification of the obstruction of the at least one purge hole (23a).

6. The method according to any one of the preceding claims, wherein said comparison step involves comparing the measured sound footprints for a predefined resonant frequency or a predefined frequency range.

7. The method according to any one of the preceding claims, wherein said measurement means of said control device (25) comprise a sound transmitter (26) and receiver (27) that can be connected to said internal volume (30) so that said transmitter (26) transmits a sound signal propagating inside said internal volume (30) and so that said receiver (27) detects a sound signal observed in said internal volume (30).

8. The method according to any one of the preceding claims, wherein said internal volume (30) of said probe (10) is provided with two purge holes (23a, 23b), said probe (10) and said control device (25) being configured so that the sound footprint measured with plugging of only one first purge hole (23a) from the exterior of said volume (30) is substantially identical to the sound footprint measured with plugging of only one second purge hole (23b) from the exterior of said volume (30),
said method comprising the following steps (102, 104, 106, 108):
• measuring a sound footprint (50) with plugging of only said first purge hole (23a);
• measuring a sound footprint (51) with plugging of only said second purge hole (23b);
• measuring a sound footprint (52) without plugging of said two purge holes (23a, 23b);
• comparing the three measured sound footprints (50, 51, 52).

9. The method according to claim 8, wherein said comparison step (108) comprises sub-steps that involve comparing:
• the sound footprint (51) measured with plugging of said first purge hole (23a) with the sound footprint (53) measured without plugging of said purge holes (23a, 23b);
• the sound footprint (52) measured with plugging of said second purge hole (23b) with the sound footprint (53) measured without plugging of said purge holes (23a, 23b);
• the sound footprint (51) measured with plugging of said first purge hole (23a) with the sound footprint (52) measured with plugging of said second purge hole (23b).

10. The method according to any one of claims 8 to 9, wherein said comparison step (108) comprises sub-steps that involve comparing:
• the sound footprint (51) measured with plugging of said first purge hole (23a) with the sound footprint (53) measured without plugging of said purge holes (23a, 23b);
• the sound footprint (50) measured with plugging of said two purge holes (23a, 23b) with the sound footprint (53) measured without plugging of said purge holes (23a, 23b);
• the sound footprint (51) measured with plugging of said first purge hole (23a) with the sound footprint (50) measured with plugging of said two purge holes (23a, 23b).

11. The method according to any one of claims 1 to 7, wherein said internal volume (30) of said probe (10) is provided with two purge holes (23a, 23b), said probe (10) and said control device (25) being configured so that the sound footprint measured with plugging of only one first purge hole (23a) from the exterior of said volume (30) is substantially identical to the sound footprint measured with plugging of only one second purge hole (23b) from the exterior of said volume (30),
said method comprising the following steps:
• measuring a sound footprint with simultaneous plugging of said two purge holes (23a, 23b);
• measuring a sound footprint without plugging of said two purge holes (23a, 23b);
• comparing the two measured sound footprints.
